# EUROPÄISCHE PATENTSCHRIFT

(11) **EP 3 578 468 B1**
(45) Veröffentlichungstag und Bekanntmachung des Hinweises auf die Patenterteilung: **30.12.2020**
(21) Anmeldenummer: 19174252.7
(22) Anmeldetag: 14.05.2019
(51) Int. Cl.: B65B 11/32, B65B 51/10

(54) **VERFAHREN UND VORRICHTUNG ZUR VERPACKUNG VON KLEINSTÜCKIGEN ARTIKELN IN HEISSSIEGELFÄHIGEM VERPACKUNGSMATERIAL MIT EINEM BEHEIZBAREN HALTEELEMENT**
METHOD AND DEVICE FOR PACKAGING SMALL ARTICLES IN THERMOWELDABLE PACKAGING MATERIAL WITH A HEATABLE RETAINING ELEMENT
PROCÉDÉ ET DISPOSITIF D'EMBALLAGE D'ARTICLES DE PETITE TAILLE DANS UN MATÉRIAU D'EMBALLAGE POUVANT ÊTRE SCELLÉ À CHAUD AVEC UN ÉLÉMENT DE MAINTIEN CHAUFFABLE

(30) Priorität: 08.06.2018 DE 102018209185
(43) Veröffentlichungstag der Anmeldung: 11.12.2019
(73) Patentinhaber: Theegarten-Pactec GmbH & Co. KG, 01237 Dresden (DE)
(72) Erfinder: Oehlert, Volker, 01809 Dohna/Röhrsdorf (DE); Dietrich, Mike, 01187 Dresden (DE); Ehlert, Sebastian, 01237 Dresden (DE)
(74) Vertreter: Grünecker Patent- und Rechtsanwälte PartG mbB

(56) Entgegenhaltungen:
- EP-A1- 0 444 229
- EP-A1- 0 733 548
- EP-A1- 3 187 424
- WO-A1-2006/108781

## Beschreibung

Die vorliegende Erfindung betrifft ein Verfahren und eine Vorrichtung zur Verpackung von kleinstückigen Artikeln in heißsiegelfähigem Verpackungsmaterial.

Bei einer bekannten Vorrichtung zum Verpackung von Hartzuckerbonbons in Bodenfalteinschlag (HCW3 der Anmelderin) gestaltet sich der Siegelvorgang aufwendig, weil die Stromversorgung der konventionellen Siegelelemente (Heizpatronen) über entsprechende Schleifringe erfolgt. Hierbei müssen z.B. acht Siegelstempel mit Strom versorgt werden und jeder Siegelstempel muss auch eine Siegelpatrone beinhalten, was einen entsprechenden Aufwand zur Folge hat. Gleichfalls verschleißen auch die Schleifringe und müssen sorgsam gegen eindringendes Wasser geschützt werden.

Aus der WO 2006/108781 A1 ist eine Verpackungsvorrichtung bekannt, bei der die Erwärmung von Drehgreifern mittels Induktion erfolgt. Die EP 2 228 306 A1 offenbart eine Verpackungsvorrichtung mit induktiv erwärmten Siegelelementen. Hierbei wird eine Heißsiegelfolie durch induktiv erwärmte Siegelbacken geformt (um das Produkt gefaltet) und anschließend versiegelt.

Basierend auf diesem Stand der Technik liegt der vorliegenden Erfindung die Aufgabe zugrunde, ein verbessertes Verfahren und eine verbesserte Vorrichtung zur Verpackung von kleinstückigen Artikeln in heißsiegelfähigem Verpackungsmaterial bereitzustellen, um die Komplexität des Siegelvorgangs, insbesondere im Hinblick auf die Prozessführung, noch weiter zu vereinfachen.

Diese Aufgabe wird durch den Gegenstand des unabhängigen Verfahrensanspruchs 1 und den Gegenstand des unabhängigen Vorrichtungsanspruchs 5 gelöst.

Das erfindungsgemäße Verfahren zum Verpacken von kleinstückigen Artikeln gemäß Anspruch 1 umfasst die Schritte:
- Schritt A: Fördern der Artikel in einem Produktstrom entlang einer Bewegungsbahn.
- Schritt B: Zuordnung von heißsiegelfähigem Verpackungsmaterial zu jedem Artikel, vorzugsweise in vereinzelter Form als Verpackungsmaterialzuschnitt.
- Schritt C: Formen des Verpackungsmaterials um den Artikel, vorzugsweise durch Anordnung des Verpackungsmaterialzuschnitts in Schlauchform und anschließende Faltung der Schlauchenden des Verpackungsmaterialzuschnitts auf zwei voneinander abweisende Seitenflächen des Artikels.
- Schritt D: Halten des Artikels und des geformten Verpackungsmaterials mit einem Halteelement zur Förderung des Artikels entlang der Bewegungsbahn, vorzugsweise durch Einklemmen der Stirnseiten des Artikels und der darauf gefalteten Schlauchenden zwischen einem Klemmbackenpaar des Halteelements.
- Schritt E: Siegeln des geformten Verpackungsmaterials durch Erwärmung des Halteelements, vorzugsweise durch das erwärmte Klemmbackenpaar an den Stirnseiten des Artikels.

Durch die erfindungsgemäße Integration von Siegelelementen bzw. einer Heiz- und Siegelfunktion in die Halteelemente einer Verpackungsmaschine ist es möglich, die Verpackung während des Haltens und gegebenenfalls Förderns der fertig eingeschlagenen Artikel gleichzeitig zu versiegeln. Dadurch wird die Prozessführung des gesamten Verpackungsverfahrens, insbesondere des Siegelvorgangs, wesentlich vereinfacht, da neben den ohnehin erforderlichen Halteelementen keine gesonderten Siegelelemente notwendig sind. Vorzugsweise wird der Artikel durch das Halteelement genau an einigen oder allen der zu siegelnden Stellen des Verpackungsmaterials gehalten.

Die notwendige Wärmeerzeugung kann auf einem kontakt- und verschleißfreien Prinzip in einer großen Anzahl von Halte- und Siegelelementen durch Induktion erfolgen. Dadurch entfallen die sonst aufwendigen Bauelemente zur Stromübertragung. Weiterhin kann ein sehr hoher Schutzgrad der Siegelelemente erreicht werden, da keine bewegbaren Bauteile abgedichtet werden müssen.

Ein weiterer nicht minderer Effekt ist, dass die Kontaktflächen der Halteelemente bzw. die Klemm- bzw. Siegelbacken (Siegelflächen) sehr klein gestaltet werden können und damit die Wärmeverluste deutlich reduzierbar sind. Ein sehr großer Anteil der durch Induktion eingebrachten Energie kann zum Kontaktsiegeln verwendet werden, während die angrenzenden Bauelemente thermisch isoliert ausgeführt werden können.

Das erfindungsgemäße Verfahren ist insbesondere zur Verpackung von Brühwürfeln und Brühtabletten in einer kontinuierlich arbeitenden Verpackungsmaschine geeignet. Bei einer derartigen Maschine ist es erforderlich, dass die verpackten Produkte nach dem Einschlagprozess an zwei Seiten und am Produktboden gesiegelt werden, damit die Verpackung fixiert wird und eine hohe Qualität gewährleistet ist. Bei einer kontinuierlich arbeitenden Verpackungsmaschine ist entsprechend eine sehr hohe Anzahl von Siegelelementen erforderlich.

Das erfindungsgemäße Verpackungsverfahren ist aber auch bei einer kontinuierlich arbeitenden, zweibahnigen Verpackungsmaschine für Brühwürfel und Brühtabletten anwendbar.

Bei einer kontinuierlich arbeitenden Verpackungsmaschine für Brühwürfel erhöht sich die Anzahl der notwendigen Siegelelemente enorm, da bei einem Seitenfalteinschlag sowohl der Produktboden als auch die beiden Stirnseiten angesiegelt werden müssen. Das bedeutet die dreifache Anzahl von Siegelelementen pro Verarbeitungsstation, was bei einbahniger Ausführung mit acht Halteelementen zu insgesamt 24 Siegelelementen führt und bei zweibahniger Ausführung mit jeweils acht Halteelementen in paralleler Anordnung sogar zu 48 Siegelelementen. Eine Schleifringübertragung nach herkömmlicher Bauart ist unter derartigen Randbedingungen kaum oder gar nicht sinnvoll realisierbar.

Bei der Verpackung von Brühwürfeln und Brühtabletten im Seitenfalteinschlag wird der Artikel vorzugsweise zunächst vollständig mit einem Packmittelzuschnitt in Form einer Rolle umhüllt. Anschließend werden die noch offenen Stirnseiten zugefaltet, wodurch das Produkt vollständig verpackt ist. Der Verpackungsprozess kann ein- oder zweibahnig über kontinuierlich bewegte Rotationsköpfe erfolgen.

Es kann von Vorteil sein, wenn Schritt A wenigstens einen der folgenden Teilschritte umfasst:
- Teilschritt A1: Bereitstellen der Artikel in Quaderform oder Würfelform, wobei die Artikel vorzugsweise Nahrungsmittel sind, bevorzugt Brühwürfel oder Brühtabletten.
- Teilschritt A2: Zuführen der Artikel zu einer Aufnahmeeinrichtung in einem einzelnen oder in mehreren parallelen Produktströmen, vorzugsweise entlang einer linearen und/oder horizontalen ersten Bewegungsrichtung, wobei besonders bevorzugt die beiden größten Seitenflächen und/oder die beiden kleinsten Seitenflächen jedes quaderförmigen Artikels parallel zur Zuführrichtung ausgerichtet sind und/oder wobei die beiden mittleren Seitenflächen jedes quaderförmigen Artikels senkrecht zur Zuführrichtung ausgerichtet sind.
- Teilschritt A3: Aufnahme der Artikel mittels einer Aufnahmeeinrichtung, wobei die Aufnahmeeinrichtung vorzugsweise als Rotationskopf ausgebildet ist, der um eine stationäre Rotationsachse drehbar ist und eine Vielzahl von Halteelementen zum Halten und Fördern der Artikel aufweist, wobei die Halteelemente umfangsseitig am Rotationskopf in gleichmäßigen Abständen angeordnet sind, wobei jedes Halteelement vorzugsweise ein Klemmbackenpaar aufweist, um den Artikel einzuklemmen, bevorzugt über die kleinsten Seitenflächen jedes quaderförmigen Artikels.
- Teilschritt A4: Fördern der Artikel mittels der Aufnahmeeinrichtung in einem einzelnen oder in mehreren parallelen Produktströmen, vorzugsweise in einer gegenüber einer ersten Bewegungsrichtung geänderten zweiten Bewegungsrichtung, bevorzugt entlang einer Kreisbahn und/oder in einer vertikalen Ebene, besonders bevorzugt in einem kontinuierlichen Prozess, wobei ganz besonders bevorzugt die beiden größten Seitenflächen und/oder die beiden kleinsten Seitenflächen jedes quaderförmigen Artikels parallel zur zweiten Bewegungsrichtung ausgerichtet sind und/oder wobei die beiden mittleren Seitenflächen jedes quaderförmigen Artikels senkrecht zur zweiten Bewegungsrichtung ausgerichtet sind.

Es kann sich aber auch als vorteilhaft erweisen, wenn Schritt B wenigstens einen der folgenden Teilschritte umfasst:
- Teilschritt B1: Zuführen von Verpackungsmaterial zu jedem Artikel, vorzugsweise während des Förderns des Artikels mittels der Aufnahmeeinrichtung.
- Teilschritt B2: Vereinzeln des Verpackungsmaterials, vorzugsweise vor, während oder nach dessen Zuführung zu dem Artikel.
- Teilschritt B3: Übergabe des Artikels mit einem diesem zugeordneten, vereinzelten Verpackungsmaterialzuschnitt an einer Übergabestation von der Aufnahmeeinrichtung an eine Verpackungseinrichtung, wobei die Verpackungseinrichtung vorzugsweise als Rotationskopf ausgebildet ist, der um eine stationäre Rotationsachse drehbar ist und eine Vielzahl von Halteelementen zum Halten und Fördern der Artikel aufweist, wobei die Halteelemente umfangsseitig am Rotationskopf in gleichmäßigen Abständen angeordnet sind, wobei jedes Halteelement vorzugsweise ein Klemmbackenpaar aufweist, um den Artikel sowie den diesem Artikel zugeordneten Verpackungsmaterialzuschnitt einzuklemmen, bevorzugt über die mittleren Seitenflächen jedes quaderförmigen Artikels, besonders bevorzugt während eine zur Rotationsachse des Rotationskopfs weisende Seitenfläche des Artikels von dem Verpackungsmaterialzuschnitt bedeckt ist und eine von der Rotationsachse des Rotationskopfs abweisende Seitenfläche des Artikels freiliegt.
- Teilschritt B4: Fördern der Artikel mittels der Verpackungseinrichtung in einem einzelnen oder in mehreren parallelen Produktströmen, vorzugsweise entlang einer gegenüber der zweiten Bewegungsrichtung geänderten dritten Bewegungsrichtung, bevorzugt entlang einer Kreisbahn und/oder in einer vertikalen Ebene, besonders bevorzugt in einem kontinuierlichen Prozess, wobei ganz besonders bevorzugt die beiden größten Seitenflächen und/oder die beiden kleinsten Seitenflächen jedes quaderförmigen Artikels parallel zur dritten Bewegungsrichtung ausgerichtet sind und/oder wobei die beiden mittleren Seitenflächen jedes quaderförmigen Artikels senkrecht zur dritten Bewegungsrichtung ausgerichtet sind.

In einer vorteilhaften Ausführung des Verfahrens umfasst Schritt C wenigstens einen der folgenden Teilschritte:
- Teilschritt C1: Anordnen des Verpackungsmaterials in Schlauchform um jeden Artikel, vorzugsweise unter vollständiger Umschließung des Artikels mit einem Verpackungsmaterialzuschnitt, sodass sich die Enden des Verpackungsmaterialzuschnitts zumindest abschnittsweise überlappen, bevorzugt auf einer der beiden größten Seitenflächen jedes quaderförmigen Artikels, wobei der Verpackungsmaterialzuschnitt besonders bevorzugt vollflächig an vier benachbarten Seitenflächen jedes quaderförmigen Artikels, beispielsweise den beiden größten und den beiden mittleren Seitenflächen jedes quaderförmigen Artikels, anliegt und/oder zwei voneinander abweisende Seitenflächen jedes quaderförmigen Artikels, beispielsweise die beiden kleinsten Seitenflächen bzw. Stirnseiten jedes quaderförmigen Artikels, zu den Enden des schlauchförmig angeordneten Verpackungsmaterialzuschnitts freiliegen.
- Teilschritt C2: Faltung der Schlauchenden des Verpackungsmaterials auf zwei voneinander abweisende Seitenflächen bzw. Stirnseiten des Artikels, vorzugsweise durch bewegbare und/oder feststehende Faltelemente, bevorzugt unter Beseitigung der Überstände des Verpackungsmaterialzuschnitts und unter Verschluss der offenen Seitenflächen bzw. Stirnseiten jedes quaderförmigen Artikels, besonders bevorzugt während des Förderns des Artikels.
- Teilschritt C3: Andrücken der gefalteten Schlauchenden des Verpackungsmaterials an die voneinander abweisenden Seitenflächen bzw. Stirnseiten des Artikels.

Es kann sich als nützlich erweisen, wenn Schritt D wenigstens einen der folgenden Teilschritte umfasst:
- Teilschritt D1: Vorwärmen des Halteelements einer Siegeleinrichtung vor der Übergabe des verpackten Artikels an einer Übergabestation von der Verpackungseinrichtung an das Halteelement, wobei die Siegeleinrichtung vorzugsweise eine als Rotationskopf ausgebildete Fördereinrichtung aufweist, wobei der Rotationskopf um eine stationäre Rotationsachse drehbar ist und eine Vielzahl von Halteelementen zum Halten und Fördern der Artikel aufweist, wobei die Halteelemente umfangseitig am Rotationskopf in gleichmäßigen Abständen angeordnet sind, wobei jedes Halteelement vorzugsweise ein induktiv erwärmbares Klemmbackenpaar aufweist, wobei Teilschritt D1 vorzugsweise wenigstens einen der folgenden Teilschritte umfasst:
   ∘ Teilschritt D1-1: Einbringen (eines Klemmbackenpaars) des Halteelements ohne Artikel in einen ersten Induktionskanal, der sich zumindest abschnittsweise entlang der Bewegungsrichtung des Halteelements erstreckt.
   ∘ Teilschritt D1-2: Erzeugen eines magnetischen Wechselfeldes innerhalb des ersten Induktionskanals, vorzugsweise durch Beaufschlagung einer dem ersten Induktionskanal zugeordneten Induktionsspule mit elektrischem Wechselstrom, zur induktiven Erwärmung des induktiv erwärmbaren (Klemmbackenpaars des) Halteelements, vorzugsweise durch Bewegung des Halteelements ohne Artikel entlang des ersten Induktionskanals.
   ∘ Teilschritt D1-3: Entfernen des induktiv erwärmbaren (Klemmbackenpaars des) Halteelements ohne Artikel aus dem ersten Induktionskanal.
- Teilschritt D2: Vorwärmen eines dem Halteelement der Siegeleinrichtung zugeordneten Bodensiegelstempels vor der Übergabe des verpackten Artikels an einer Übergabestation von der Verpackungseinrichtung an das Halteelement, wobei Teilschritt D2 vorzugsweise wenigstens einen der folgenden Teilschritte umfasst:
   ∘ Teilschritt D2-1: Einbringen des Bodensiegelstempels in einen ersten Induktionskanal, der sich zumindest abschnittsweise entlang der Bewegungsrichtung des Bodensiegelstempels erstreckt.
   ∘ Teilschritt D2-2: Erzeugen eines magnetischen Wechselfeldes innerhalb des ersten Induktionskanals, vorzugsweise durch Beaufschlagung einer dem ersten Induktionskanal zugeordneten Induktionsspule mit elektrischem Wechselstrom, zur induktiven Erwärmung des induktiv erwärmbaren Bodensiegelstempels, vorzugsweise durch Bewegung des Bodensiegelstempels entlang des ersten Induktionskanals.
   ∘ Teilschritt D2-3: Entfernen des induktiv erwärmbaren Bodensiegelstempels aus dem ersten Induktionskanal.
- Teilschritt D3: Übergabe des verpackten Artikels an der Übergabestation von der Verpackungsvorrichtung an das Halteelement der Siegeleinrichtung.
- Teilschritt D4: Aufnahme des Artikels mit dem Halteelement der Siegeleinrichtung, sodass der Artikel kraftschlüssig und/oder formschlüssig von dem Halteelement gehalten wird, vorzugsweise durch Einklemmen der Stirnseiten des Artikels und der darauf gefalteten Schlauchenden des Verpackungsmaterials bzw. Verpackungsmaterialzuschnitts zwischen dem Klemmbackenpaar des Halteelements.
- Teilschritt D5: Fördern der Artikel mittels der Fördereinrichtung in einem einzelnen oder in mehreren parallelen Produktströmen, vorzugsweise entlang einer gegenüber der dritten Bewegungsrichtung der Verpackungsvorrichtung geänderten vierten Bewegungsrichtung, bevorzugt entlang einer Kreisbahn und/oder in einer vertikalen Ebene, besonders bevorzugt in einem kontinuierlichen Prozess, wobei ganz besonders bevorzugt die beiden größten Seitenflächen und/oder die beiden kleinsten Seitenflächen jedes quaderförmigen Artikels parallel zur vierten Bewegungsrichtung ausgerichtet sind und/oder wobei die beiden mittleren Seitenflächen jedes quaderförmigen Artikels senkrecht zur vierten Bewegungsrichtung ausgerichtet sind.

Gemäß einer weiteren vorteilhaften Ausführung des Verfahrens umfasst Schritt E wenigstens einen der folgenden Teilschritte:
- Teilschritt E1: Siegeln des Verpackungsmaterials durch das induktive erwärmte (Klemmbackenpaar des) Halteelement(s), vorzugsweise umfassend wenigstens einen der folgenden Teilschritte:
   ∘ Teilschritt E1-1: Einbringen des induktiv erwärmbaren (Klemmbackenpaars des) Halteelements mit einem davon gehaltenen Artikel in einem einzelnen oder in mehreren parallelen Produktströmen in einen (zweiten) Induktionskanal, der sich zumindest abschnittsweise entlang der Bewegungsrichtung des Halteelements erstreckt, vorzugsweise derart, dass sich der gehaltene Artikel vollumfänglich innerhalb des (zweiten) Induktionskanals befindet.
   ∘ Teilschritt E1-2: Erzeugen eines magnetischen Wechselfeldes innerhalb des (zweiten) Induktionskanals, vorzugsweise durch Beaufschlagung einer dem (zweiten) Induktionskanal zugeordneten Induktionsspule mit elektrischem Wechselstrom, zur induktiven Erwärmung des induktiv erwärmbaren Klemmbackenpaars des) Halteelements, vorzugsweise durch Bewegung des (Klemmbackenpaars des) Halteelements mit dem davon gehaltenen Artikel entlang des (zweiten) Induktionskanals.
   ∘ Teilschritt E1-3: Siegeln der gefalteten Schlauchenden des Verpackungsmaterials bzw. Verpackungsmaterialzuschnitts an den Stirnseiten des Artikels, vorzugsweise durch Längssiegeln entlang oder parallel zur vierten Bewegungsrichtung.
   ∘ Teilschritt E1-4: Entfernen des induktiv erwärmbaren (Klemmbackenpaars des) Halteelements mit dem davon gehaltenen Artikel aus dem zweiten Induktionskanal.
- Teilschritt E2: Siegeln des Verpackungsmaterials durch einen dem Halteelement zugeordneten, induktiv erwärmbaren Bodensiegelstempel, vorzugsweise umfassend wenigstens einen der folgenden Teilschritte:
   ∘ Teilschritt E2-1: Einbringen des induktiv erwärmbaren Bodensiegelstempels in den zweiten Induktionskanal.
   ∘ Teilschritt E2-2: Erzeugen eines magnetischen Wechselfeldes innerhalb des zweiten Induktionskanals, vorzugsweise durch Beaufschlagung einer dem ersten Induktionskanal zugeordneten Induktionsspule mit elektrischem Wechselstrom, zur induktiven Erwärmung des induktiv erwärmbaren Bodensiegelstempels, vorzugsweise durch Bewegung des Bodensiegelstempels entlang des zweiten Induktionskanals.
   ∘ Teilschritt E2-3: Andrücken des induktiv erwärmten Bodensiegelstempels auf die überlappenden Enden des den Artikel umschließenden Verpackungsmaterialzuschnitts.
   ∘ Teilschritt E2-4: Siegeln der überlappenden Enden des den Artikel umschließenden Verpackungsmaterialzuschnitts für jeden vereinzelten Artikel, vorzugsweise durch Quersiegeln senkrecht zur Bewegungsrichtung, bevorzugt auf einer der Rotationsachse des Rotationskopfs zugewandten Seitenfläche des Artikels.
   ∘ Teilschritt E2-5: Entfernen des Bodensiegelstempels von dem Artikel.
   ∘ Teilschritt E2-6: Entfernen des Bodensiegelstempels aus dem zweiten Induktionskanal.
- Teilschritt E3: Abgabe des im versiegelten Verpackungsmaterialzuschnitt eingeschlossenen Artikels an eine nachgelagerte Einrichtung.

Die eingangs gestellte Aufgabe wird ebenfalls gelöst durch die Vorrichtung zum Verpacken von kleinstückigen Artikeln gemäß Anspruch 7, vorzugsweise nach dem Verfahren gemäß einer der vorangehenden Ausführungen, umfassend wenigstens eine vorzugsweise als Rotationskopf ausgebildete Fördereinrichtung mit wenigstens einem induktiv erwärmbaren Haltelement zum Halten und Fördern eines mit heißsiegelfähigem Verpackungsmaterial umgebenen Artikels entlang einer Bewegungsbahn, und wenigstens eine Induktionseinrichtung zur induktiven Erwärmung des induktiv erwärmbaren Haltelements, wobei das induktiv erwärmbare Haltelement ausgebildet ist, um in einem erwärmten Zustand das heißsiegelfähige Verpackungsmaterial zu siegeln.

Es kann sinnvoll sein, wenn das Haltelement ausgebildet ist, um den mit heißsiegelfähigem Verpackungsmaterial umgebenen Artikel kraftschlüssig und/oder formschlüssig zu halten.

Es kann aber auch praktisch sein, wenn das Haltelement ein Klemmbackenpaar zum Einklemmen des Artikels aufweist, wobei vorzugsweise lediglich die Klemmbacken des Klemmbackenpaars induktiv erwärmbar sind und die Klemmbacken bevorzugt gegenüber angrenzenden Bauelementen thermisch isoliert sind, um einen Wärmeverlust an die Umgebung zu vermeiden.

Ebenso kann es sich als nützlich erweisen, wenn jede Klemmbacke des Klemmbackenpaars eine Form und/oder Größe und/oder Innenkontur aufweist, die an eine Form und/oder Größe und/oder Außenkontur der einzuklemmenden Seitenfläche des Artikels angepasst ist.

Gemäß einer vorteilhaften Ausführung der Erfindung weist die Induktionseinrichtung wenigstens einen Induktionskanal auf, der sich zumindest abschnittsweise entlang der Bewegungsrichtung der Fördereinrichtung erstreckt, wobei der Induktionskanal vorzugsweise verstellbar gegenüber der Fördereinrichtung ausgebildet und/oder angeordnet ist, um beispielsweise einen Zugang zur Fördereinrichtung zu Wartungszwecken zu ermöglichen.

Es kann aber auch von Vorteil sein, wenn die Induktionseinrichtung zwei Induktionskanäle aufweist, die sich im Abstand voneinander jeweils zumindest abschnittsweise entlang der Bewegungsrichtung der Fördereinrichtung erstrecken, wobei der erste Induktionskanal ausgebildet ist, um das Halteelement vor der Aufnahme eines Artikels induktiv zu erwärmen und wobei der zweite Induktionskanal ausgebildet ist, um das Halteelement während des Haltens eines Artikel induktiv zu erwärmen.

Gemäß einer anderen vorteilhaften Ausführung der Erfindung erfolgt die Übergabe des Artikels von einer vorgelagerten Einrichtung an das Halteelement und/oder die Übergabe des Artikels von dem Halteelement an eine nachgelagerte Einrichtung zwischen dem ersten Induktionskanal und dem zweiten Induktionskanal.

Es kann auch nützlich sein, wenn die Induktionseinrichtung ausgebildet ist, um die mit heißsiegelfähigem Verpackungsmaterial umgebenen Artikel in einem einzelnen oder in mehreren parallelen Produktströmen zu verpacken, vorzugsweise um die Artikel in einem einzelnen oder in mehreren parallelen Produktströmen durch die Induktionseinrichtung zu führen, bevorzugt um die Artikel in einem einzelnen oder in mehreren parallelen Produktströmen durch denselben Induktionskanal zu führen.

Nach einer anderen vorteilhaften Ausführung der Erfindung ist jeder Induktionskanal rinnenförmig ausgebildet und weist ein im Wesentlichen U-förmiges Querschnittsprofil auf, wobei jedem Induktionskanal wenigstens eine Induktionsspule zugeordnet ist, die zum Erzeugen eines magnetischen Wechselfeldes innerhalb des Induktionskanals und zur induktiven Erwärmung des induktiv erwärmbaren Halteelements mit elektrischem Wechselstrom beaufschlagbar ist.

Es kann überdies von Vorteil sein, wenn jedem Halteelement ein induktiv erwärmbarer Bodensiegelstempel zur Siegelung einer Bodenfalte des Verpackungsmaterials zugeordnet ist.

Weitere vorteilhafte Ausführungsformen der Erfindung ergeben sich durch Kombinationen der offenbarten Merkmale.

### Kurze Beschreibung der Figuren

Es zeigen:
Figur 1: eine schematische Ansicht des erfindungsgemäßen Verfahrens und der erfindungsgemäßen Vorrichtung, wobei die Darstellung auf die wesentlichen Details beschränkt ist;
Figur 2: eine perspektivische Ansicht eines quaderförmigen Artikels mit verschieden großen Seitenflächen;
Figur 3: eine Ausführungsform einer erfindungsgemäßen Verpackungsvorrichtung in zweibahniger Ausführung, umfassend eine als Rotationskopf ausgebildete Fördereinrichtung mit einer Vielzahl von Halteelementen und zugeordneten Bodensiegelstempeln; und
Figur 4; eine Schnittansicht durch den Induktionskanal mit Blick auf zwei parallel angeordnete Halteelemente mit jeweils einem Klemmbackenpaar und einem zugeordneten Bodensiegelstempel.

### Detaillierte Beschreibung der bevorzugten Ausführungsbeispiele

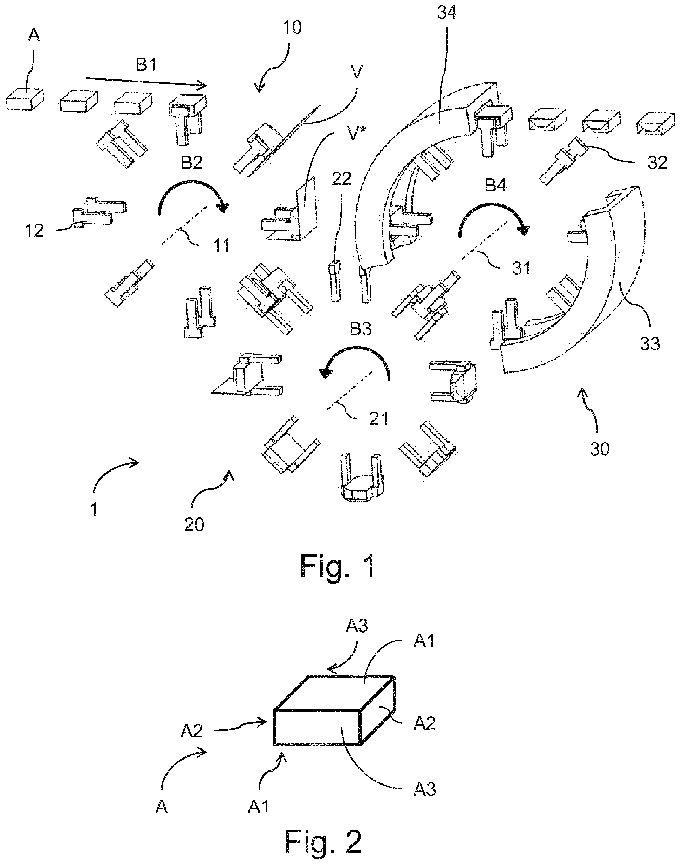

Figur 1 zeigt eine stark vereinfachte und schematische Ansicht einer vorteilhaften Ausführungsform des erfindungsgemäßen Verfahrens und der erfindungsgemäßen Vorrichtung.

In dieser vorteilhaften Ausführungsform weist die erfindungsgemäße Verpackungsvorrichtung folgende Einrichtungen auf:
- Aufnahmeeinrichtung 10 bzw. erster Rotationskopf: Produktaufnahme, Zuführung Packmittelabschnitt und ein erster Faltschritt.
- Verpackungseinrichtung 20 bzw. zweiter Rotationskopf: Fertigfalten des Seitenfalteinschlages durch mitbewegte und feststehende Faltelemente (wie an einer WHF für Seitenfalteinschlag).
- Siegeleinrichtung 30 bzw. dritter Rotationskopf: Ansiegeln sowohl der Seitenfalten als auch des Produktbodens.

Die seitlich angeordneten Klemmbacken 32 der Halteelemente 32 im dritten Rotationskopf 30 dienen gleichzeitig als Siegelbacken für die Stirnflächen der gehaltenen Artikel A.

Die Wärme wird in den Siegelbacken 32 wird durch Induktion erzeugt.

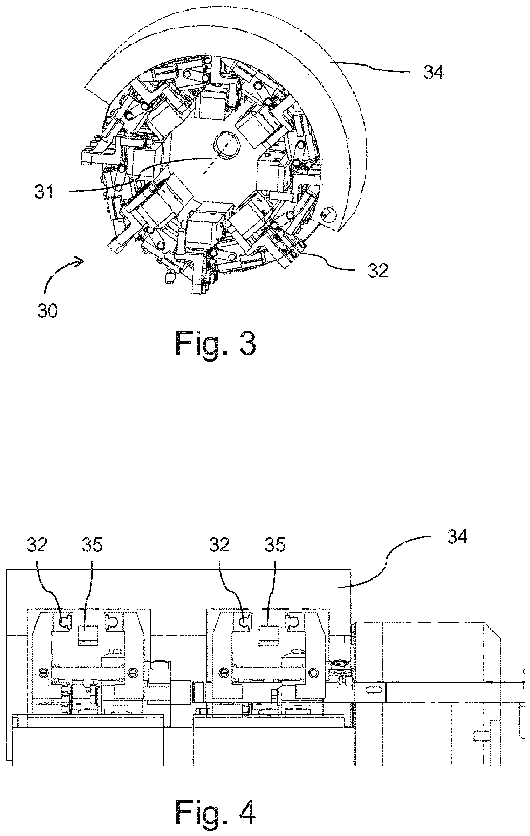

Um den dritten Rotationskopf 30 herum ist im Bereich des Produkttransportes entlang der vierten Bewegungsbahn B4 ein U-förmiger Induktionskanal 34 (bei zweibahniger Ausführung je Bahn einmal) angeordnet, der die Klemm-/Siegelbacken der Halteelemente 32 und einen Boden-Ansiegelstempel 35 (vgl. Fig. 4) an drei Seiten umschließt und durch den die Klemm-/Siegelbacken der Halteelemente 32 aufgrund der Rotation des Rotationskopfs 30 hindurchbewegt werden.

Es sind verschiedene Induktions-Spulengestaltungen möglich.

Auch im Bereich ohne Artikeltransport kann ein Segment eines Induktionskanals 33 angeordnet werden, um die Energieübertragung zu intensivieren.

Die Induktionskanäle 33, 34 können verstellbar und/oder veränderlich (z.B. schwenkbar) angeordnet und/oder ausgebildet sein, um die Zugänglichkeit für prozessbedingte Arbeiten wie Reinigung, Einstellung etc. an die Elemente des dritten Rotationskopfs 30 bzw. Siegelkopfes zu gewährleisten.

Die Halteelemente 32 mit den integrierten Siegeleinsätzen sowie der Boden-Ansiegelstempel 35 sind thermisch und elektrisch zur Lagerstelle der Elemente isoliert, damit nur örtlich begrenzt die Wärmemenge eingebracht wird, die zum Siegeln benötigt wird.

In den Induktionskanälen 33, 34 sind Induktionsspulen untergebracht, die stromdurchflossen sind und dadurch ein elektromagnetisches Wechselfeld erzeugen.

Durch die Anordnung der metallischen Elemente, d.h. der Klemm-/Siegelbacken der Halteelemente 32, im Bereich des Induktionskanals 33, 34 wird beim Anlegen einer Wechselspannung in diesen Teilen ein elektrischer Induktionsstrom erzeugt wodurch aufgrund des Widerstandes innerhalb der Klemm-/Siegelbacken der Halteelemente 32 Wärme erzeugt wird, welche zum Ansiegeln des Packmittels der verpackten Artikel A genutzt wird. Ein Erwärmen der Artikel A erfolgt nicht, da sie nicht elektrisch leitend sind.

Beim Einschalten der Verpackungsvorrichtung 1 ist es von Vorteil, die Klemm-/Siegelbacken der Halteelemente 32 vor dem Verpacken "warm zu fahren", indem die Halteelemente 32 des dritten Rotationskopfs 30 bzw. Siegelkopfes zunächst ohne Artikel A durch die Induktionskanäle 33, 34 bewegt werden.

Weitere Anwendungsgebiete sind jegliche (elektrisch nicht leitende) Artikel A bzw. Produkte, deren Verpackung versiegelt werden soll. Das betrifft sowohl kontinuierliche als auch intermittierend arbeitende Verpackungsmaschinen. Beim Siegeln gegen den Artikel A, indem die Klemm-/Siegelbacken der Halteelemente 32 hierzu Verwendung finden, ist jedoch die Temperaturbeständigkeit der Artikel A bzw. Produkte eine limitierende Größe.

Die Erfindung erstreckt sich z.B. auch auf Heizbänder zum gleichzeitigen Produkttransport und Versiegeln der Faltung, indem diese eine offene oder auch geschlossene Induktionsspule durchlaufen und dadurch erwärmt werden und wodurch eine verlustärmere Erwärmung von Heizbändern zu erwarten ist.

Die Erfindung erstreckt sich ebenso auf eine Induktionserwärmung einer Längssiegeleinrichtung und/oder Quersiegeleinrichtung in einer Flow-Pack-Maschine, wobei hier nicht eine derartig hohe Anzahl von Siegelelementen vorhanden ist, was die Stromversorgung konventioneller Siegelpatronen in Grenzen hält.

Erfindungsgemäß werden die Halteelemente zum Halten und Fördern der Artikel A gleichzeitig als Siegelelemente benutzt, wobei die Wärmeerzeugung vorzugsweise durch Induktion unmittelbar in den Siegelelementen erfolgen kann.

Vorteile dieser Lösung sind:
- keine aufwendigen und störungsanfälligen Energieübertragungselemente
- geringer Teileaufwand
- geringer Wartungsaufwand
- ein hoher elektrischer Schutzgrad ist erzielbar
- die eingebrachte Energiemenge kann auf das zum Siegeln notwendige Minimum reduziert werden, was die Energiebilanz verbessert und die Durchwärmung der Maschine reduziert
- Neben den Haltebacken als Siegelelemente können gleichfalls die Boden-Ansiegelstempel mittels Induktion erwärmt werden
- Das Verfahren eignet sich auch bei einer großen Vielzahl von Halte- und Siegelelementen, was insbesondere bei einer mehrbahnigen kontinuierlichen Verpackungsmaschine der Fall ist.

Nach dem erfindungsgemäßen Verfahren werden vereinzelte Artikel A in Gestalt von Brühwürfeln oder quaderförmigen Brühtabletten beispielsweise von einem Transportband als Zuführeinrichtung in einer linearen und horizontalen ersten Bewegungsrichtung B1 zu einer Aufnahmeposition zugeführt. Dabei sind vorzugsweise die größten und kleinsten Seitenflächen A1 und A3 der quaderförmigen Artikel A parallel zur ersten Bewegungsrichtung B1 ausgerichtet und die mittleren Seitenflächen A2 senkrecht dazu. An dieser Aufnahmeposition nimmt die Aufnahmeeinrichtung 10, die als um eine stationäre Rotationsachse 11 drehbarer Rotationskopf 10 mit einer Vielzahl von beweglichen Halteelementen 12 ausgebildet ist, jeden Artikel A zwischen jeweils einem Klemmbackenpaar 12 auf. Dabei werden die quaderförmigen Artikel A vorzugsweise über die beiden kleinsten Seitenflächen A3, die im Folgenden auch als Stirnseiten bezeichnet werden, eingeklemmt.

Der Rotationskopf 10 fördert die Artikel A (in der dargestellten Ansicht im Uhrzeigersinn) in einer gegenüber der ersten Bewegungsrichtung B1 geänderten zweiten Bewegungsrichtung B2 auf einer Kreisbahn in einer vertikalen Ebene zu einer Packmittelzuführstation, an welcher jedem Artikel A ein vereinzelter Verpackungsmaterialzuschnitt V*, der zuvor von einer Rolle von Verpackungsmaterial V abgetrennt wurde, zugeordnet wird. Der Verpackungsmaterialzuschnitt V* wird dabei von der in der zweiten Bewegungsrichtung B2 vorderen Seitenfläche A2 des Artikels A zuerst kontaktiert und anschließend durch die Bewegung des Artikels A gegenüber dem Verpackungsmaterialzuschnitt V* L-förmig über die außen liegende angrenzende Seitenfläche A1 des Artikels A geklappt.

In diesem Zustand wird der Artikel A mit dem L-förmig angeordneten Verpackungsmaterialzuschnitt V* an die nachgelagerte Verpackungseinrichtung 20 übergeben, wobei während der Übergabe des Artikels A der Verpackungsmaterialzuschnitt V* weiter an die in der zweiten Bewegungsrichtung B2 hinteren Seitenfläche A2 des Artikels A geklappt wird. Die Verpackungseinrichtung 20 ist im vorliegenden Ausführungsbeispiel als um eine stationäre Rotationsachse 21 drehbarer Rotationskopf 20 ausgebildet und umfasst eine Vielzahl von beweglichen Halteelementen 22 mit jeweils einem Klemmbackenpaar 22, die in regelmäßigen Abständen um den Umfang des Rotationskopfs 20 angeordnet sind und den Artikel A mit dem darum angeordneten Verpackungsmaterialzuschnitt V* zwischen dem Klemmbackenpaar 22 über die mittleren Seitenflächen A2 des Artikels A einzuklemmen. Anschließend wird der Artikel A (in der dargestellten Ansicht im Gegenuhrzeigersinn) in einer gegenüber der zweiten Bewegungsrichtung B2 geänderten dritten Bewegungsrichtung B3 auf einer Kreisbahn in einer vertikalen Ebene gefördert. Dabei wird der Verpackungsmaterialzuschnitt V* in Schlauchform um den Artikel A angeordnet, sodass der Verpackungsmaterialzuschnitt V* die vier aneinander angrenzenden Seitenflächen A1 und A2 um den vollen Umfang des Artikels A vollständig bedeckt und die beiden voneinander abweisenden Seitenflächen A3 bzw. Stirnseiten des Artikels A zu den Schlauchenden des Verpackungsmaterialzuschnitts V* freiliegen. Während der Bewegung des Artikels A entlang der dritten Bewegungsbahn B3 werden anschließend die Schlauchenden eingeklappt und unter Beseitigung der Verpackungsmaterialüberstände sowie unter vollständigem Verschluss der Seitenflächen A3 in Seitenfaltung auf diese Seitenflächen A3 bzw. Stirnseiten des Artikels A gefaltet. Ein Verfahren zum Verpacken von kleinstückigen Artikeln in Seitenfaltung ist beispielsweise aus der WO 2014/056589 A1 der Anmelderin bekannt, deren Inhalte durch Bezugnahme vollständig hierin enthalten sind.

Nach Abschluss der Formung des Verpackungsmaterialzuschnitts V* um den Artikel A wird der verpackte Artikel A an einer Übergabestation an eine nachgelagerte Siegeleinrichtung 30 übergeben.

Die Siegeleinrichtung 30 weist im vorliegenden Fall eine als Rotationskopf 30 ausgebildete Fördereinrichtung 30 mit einer Vielzahl von Halteelementen und Klemmbackenpaaren 32 auf. Die stationäre Rotationsachse 31 des Rotationskopfs 30 ist parallel zu den Rotationsachsen 11, 21 der beiden vorgelagerten Rotationsköpfe 10, 20 ausgerichtet. Die Besonderheit dieser Siegeleinrichtung 30 ist, dass jedes Klemmbackenpaar eines jeden Heizelements induktiv erwärmbar ist und diesem Rotationskopf 30 Induktionskanäle 33, 34 zugeordnet sind, die sich stromaufwärts bzw. stromabwärts der Übergabestation kurvenförmig abschnittsweise entlang der kreisförmigen Bewegungsrichtung B4 des Rotationskopfs 30 erstrecken.

An der Übergabestation wird der Artikel A vorzugsweise über die Seitenflächen A3 mit den darauf gefalteten Schlauchenden zwischen den erwärmbaren Klemmbacken jedes Klemmbackenpaars 32 eingeklemmt. Jede Klemmbacke des Klemmbackenpaars 32 ist vorzugsweise im Hinblick auf Form, Größe und Kontur einer einzuklemmenden Seitenflächen des einzuklemmenden Artikels A angepasst, um den Artikel A während des Förderns entlang der vierten Bewegungsrichtung B4 kraft- und/oder formschlüssig im Halteelement 32 zu halten, und ist gegenüber angrenzenden Bauelementen thermisch isoliert, um einen Wärmeverlust an die Umgebung zu minimieren. Bevor das Klemmbackenpaar 32 die Übergabestation erreicht, durchläuft es den entlang der vierten Bewegungsrichtung B4 stromaufwärts der Übergabestation angeordneten ersten Induktionskanal 33. Dem ersten Induktionskanal 33 ist eine Instruktionsspule zugeordnet, die zur Erzeugung eines magnetischen Wechselfeldes mit einer elektrischen Wechselspannung beaufschlagbar ist.

Der zweite Induktionskanal 34 ist im Wesentlichen identisch zu dem ersten Induktionskanal 33 aufgebaut, allerdings stromabwärts der Übergabestation angeordnet.

Beim Durchlaufen des zweiten Induktionskanals 34 werden die Klemmbacken des Klemmbackenpaars 32 wie im ersten Induktionskanal 33 erwärmt. Die durch Induktion erzeugte Wärmeenergie wird durch den Kontaktdruck der Klemmbacken auf das Verpackungsmaterial V* übertragen, um die Seitenfalten an den Stirnflächen A3 des Artikels A zu siegeln. Der induktiv erwärmte Bodensiegelstempel 35 wird auf die zu der Rotationsachse 31 des Rotationskopfs 30 weisende Seitenfläche A1 des Artikels A gedrückt, um die Bodenfalte quer zur Bewegungsrichtung B4 zu siegeln.

Nach Siegelung der beiden Seitenfalten und der Bodenfalte des Verpackungsmaterials V* im zweiten Induktionskanal 34 wird der vollständig verpackte und versiegelte Artikel A an eine nachgelagerte Einrichtung übergeben.

Wie in Figur 4 anschaulich dargestellt, ist die Erfindung insbesondere bei einer kontinuierlich arbeitenden, zweibahnigen Verpackungsmaschine in einer vorteilhaften Weise anwendbar, wobei die zu verpackenden Artikel A auf zwei parallelen Produktbahnen durch die Induktionseinrichtung geführt werden.

### Bezugszeichenliste:

- 1: Verpackungsmaschine
- 10: Aufnahmeeinrichtung bzw. erster Rotationskopf
- 11: Drehachse des Rotationskopfs
- 12: Halteelemente bzw. Klemmbacken des Rotationskopfs
- 20: Verpackungseinrichtung bzw. zweiter Rotationskopf
- 21: Drehachse des Rotationskopfs
- 22: Halteelemente bzw. Klemmbacken des Rotationskopfs
- 30: Siegeleinrichtung bzw. dritter Rotationskopf
- 31: Drehachse
- 32: Halteelemente bzw. Klemm-/Siegelbacken des Rotationskopfs
- 33: Erster Induktionskanal
- 34: Zweiter Induktionskanal
- 35: Bodensiegelstempel
- A: Artikel
- A1: Erste Seitenfläche(n)
- A2: Zweite Seitenfläche(n)
- A3: Dritte Seitenfläche(n)
- B1: Erste Bewegungsrichtung
- B2: Zweite Bewegungsrichtung
- B3: Dritte Bewegungsrichtung
- B4: Vierte Bewegungsrichtung
- V: Verpackungsmaterial
- V*: Verpackungsmaterialzuschnitt

## Patentansprüche

1. Verfahren zum Verpacken von kleinstückigen Artikeln (A), umfassend die Schritte:
a. Schritt A: Fördern der Artikel (A) in einem Produktstrom entlang einer Bewegungsbahn (B1, B2, B3, B4).
b. Schritt B: Zuordnung von heißsiegelfähigem Verpackungsmaterial (V) zu jedem Artikel (A), vorzugsweise in vereinzelter Form als Verpackungsmaterialzuschnitt (V*).
c. Schritt C: Formen des Verpackungsmaterials (V) um den Artikel (A), vorzugsweise durch Anordnung des Verpackungsmaterials (V) in Schlauchform und anschließende Faltung der Schlauchenden des Verpackungsmaterials (V) auf zwei voneinander abweisende Seitenflächen (A3) des Artikels (A).
d. Schritt D: Halten des Artikels (A) und des geformten Verpackungsmaterials (V) mit einem Halteelement (32) zur Förderung des Artikels (A) entlang der Bewegungsbahn (B1, B2, B3, B4), vorzugsweise durch Einklemmen der Stirnseiten (A3) des Artikels (A) und der darauf gefalteten Schlauchenden zwischen einem Klemmbackenpaar des Halteelements (32).
e. Schritt E: Siegeln des geformten Verpackungsmaterials (V) durch Erwärmung des Halteelements (32), vorzugsweise durch das erwärmte Klemmbackenpaar (32) an den Stirnseiten (A3) des Artikels (A).

2. Verfahren nach Anspruch 1, **dadurch gekennzeichnet, dass** Schritt C wenigstens einen der folgenden Teilschritte umfasst:
a. Teilschritt C1: Anordnen des Verpackungsmaterials (V) in Schlauchform um jeden Artikel, vorzugsweise unter vollständiger Umschließung des Artikels (A) mit einem Verpackungsmaterialzuschnitt (V*), sodass sich die Enden des Verpackungsmaterialzuschnitts (V*) zumindest abschnittsweise überlappen, bevorzugt auf einer der beiden größten Seitenflächen (A1) jedes quaderförmigen Artikels (A), wobei der Verpackungsmaterialzuschnitt (V*) besonders bevorzugt vollflächig an vier benachbarten Seitenflächen (A1, A2) jedes quaderförmigen Artikels (A), beispielsweise den beiden größten und den beiden mittleren Seitenflächen (A1, A2) jedes quaderförmigen Artikels (A), anliegt und/oder zwei voneinander abweisende Seitenflächen (A3) jedes quaderförmigen Artikels (A), beispielsweise die beiden kleinsten Seitenflächen (A3) bzw. Stirnseiten jedes quaderförmigen Artikels (A), zu den Enden des schlauchförmig angeordneten Verpackungsmaterialzuschnitts (V*) freiliegen.
b. Teilschritt C2: Faltung der Schlauchenden des Verpackungsmaterials (V) auf zwei voneinander abweisende Seitenflächen (A3) bzw. Stirnseiten des Artikels (A), vorzugsweise durch bewegbare und/oder feststehende Faltelemente, bevorzugt unter Beseitigung der Überstände des Verpackungsmaterialzuschnitts (V*) und unter Verschluss der offenen Seitenflächen (A3) bzw. Stirnseiten jedes quaderförmigen Artikels (A), besonders bevorzugt während des Förderns des Artikels (A).
c. Teilschritt C3: Andrücken der gefalteten Schlauchenden des Verpackungsmaterials (V) an die voneinander abweisende Seitenflächen (A3) bzw. Stirnseiten des Artikels (A).

3. Verfahren nach einem der vorangehenden Ansprüche, **dadurch gekennzeichnet, dass** Schritt D wenigstens einen der folgenden Teilschritte umfasst:
a. Teilschritt D1: Vorwärmen des Halteelements (32) einer Siegeleinrichtung (30) vor der Übergabe des verpackten Artikels (A) an einer Übergabestation von der Verpackungseinrichtung (20) an das Halteelement (32), wobei die Siegeleinrichtung (30) vorzugsweise eine als Rotationskopf (30) ausgebildete Fördereinrichtung aufweist, wobei der Rotationskopf (30) um eine stationäre Rotationsachse (31) drehbar ist und eine Vielzahl von Halteelementen (32) zum Halten und Fördern der Artikel (A) aufweist, wobei die Halteelemente (32) umfangseitig am Rotationskopf (30) in gleichmäßigen Abständen angeordnet sind, wobei jedes Halteelement (32) vorzugsweise ein induktiv erwärmbares Klemmbackenpaar (32) aufweist, wobei Teilschritt D1 vorzugsweise wenigstens einen der folgenden Teilschritte umfasst:
i. Teilschritt D1-1: Einbringen des Halteelements (32) ohne Artikel in einen ersten Induktionskanal (33), der sich zumindest abschnittsweise entlang der Bewegungsrichtung (B4) des Halteelements (32) erstreckt.
ii. Teilschritt D1-2: Erzeugen eines magnetischen Wechselfeldes innerhalb des ersten Induktionskanals (33), vorzugsweise durch Beaufschlagung einer dem ersten Induktionskanal (33) zugeordneten Induktionsspule mit elektrischem Wechselstrom, zur induktiven Erwärmung des induktiv erwärmbaren Halteelements (32), vorzugsweise durch Bewegung des Halteelements (32) ohne Artikel entlang des ersten Induktionskanals (33).
iii. Teilschritt D1-3: Entfernen des induktiv erwärmbaren Halteelements (32) ohne Artikel aus dem ersten Induktionskanal (33).
b. Teilschritt D2: Vorwärmen eines dem Halteelement (32) der Siegeleinrichtung (30) zugeordneten Bodensiegelstempels (35) vor der Übergabe des verpackten Artikels (A) an einer Übergabestation von der Verpackungseinrichtung (20) an das Halteelement (32), wobei Teilschritt D2 vorzugsweise wenigstens einen der folgenden Teilschritte umfasst:
i. Teilschritt D2-1: Einbringen des Bodensiegelstempels (35) in einen ersten Induktionskanal (33), der sich zumindest abschnittsweise entlang der Bewegungsrichtung (B4) des Bodensiegelstempels (35) erstreckt.
ii. Teilschritt D2-2: Erzeugen eines magnetischen Wechselfeldes innerhalb des ersten Induktionskanals (33), vorzugsweise durch Beaufschlagung einer dem ersten Induktionskanal (33) zugeordneten Induktionsspule mit elektrischem Wechselstrom, zur induktiven Erwärmung des induktiv erwärmbaren Bodensiegelstempels (35), vorzugsweise durch Bewegung des Bodensiegelstempels (35) entlang des ersten Induktionskanals (33).
iii. Teilschritt D2-3: Entfernen des induktiv erwärmbaren Bodensiegelstempels (35) aus dem ersten Induktionskanal (33).
c. Teilschritt D3: Übergabe des verpackten Artikels (A) an der Übergabestation von der Verpackungsvorrichtung (20) an das Halteelement (32) der Siegeleinrichtung (30).
d. Teilschritt D4: Aufnahme des Artikels (A) mit dem Halteelement (32) der Siegeleinrichtung (30), sodass der Artikel (A) kraftschlüssig und/oder formschlüssig von dem Halteelement (32) gehalten wird, vorzugsweise durch Einklemmen der Stirnseiten (A3) des Artikels (A) und der darauf gefalteten Schlauchenden des Verpackungsmaterials (V) bzw. Verpackungsmaterialzuschnitts (V*) zwischen dem Klemmbackenpaar (32) des Halteelements.
e. Teilschritt D5: Fördern der Artikel (A) mittels der Fördereinrichtung (30) in einem einzelnen oder in mehreren parallelen Produktströmen, vorzugsweise entlang einer gegenüber der dritten Bewegungsrichtung (B3) der Verpackungsvorrichtung (20) geänderten vierten Bewegungsrichtung (B4), bevorzugt entlang einer Kreisbahn und/oder in einer vertikalen Ebene, besonders bevorzugt in einem kontinuierlichen Prozess, wobei ganz besonders bevorzugt die beiden größten Seitenflächen (A1) und/oder die beiden kleinsten Seitenflächen (A3) jedes quaderförmigen Artikels (A) parallel zur vierten Bewegungsrichtung (B4) ausgerichtet sind und/oder wobei die beiden mittleren Seitenflächen (A2) jedes quaderförmigen Artikels (A) senkrecht zur vierten Bewegungsrichtung (B4) ausgerichtet sind.

4. Verfahren nach einem der vorangehenden Ansprüche, **dadurch gekennzeichnet, dass** Schritt E wenigstens einen der folgenden Teilschritte umfasst:
a. Teilschritt E1: Siegeln des Verpackungsmaterials (V) durch das induktive erwärmte Halteelement (32), vorzugsweise umfassend wenigstens einen der folgenden Teilschritte:
i. Teilschritt E1-1: Einbringen des induktiv erwärmbaren Halteelements (32) mit einem davon gehaltenen Artikel (A) in einem einzelnen oder in mehreren parallelen Produktströmen in einen zweiten Induktionskanal (34), der sich zumindest abschnittsweise entlang der Bewegungsrichtung (B4) des Halteelements (32) erstreckt, vorzugsweise derart, dass sich der gehaltene Artikel (A) vollumfänglich innerhalb des zweiten Induktionskanals (34) befindet.
ii. Teilschritt E1-2: Erzeugen eines magnetischen Wechselfeldes innerhalb des zweiten Induktionskanals (34), vorzugsweise durch Beaufschlagung einer dem zweiten Induktionskanal (34) zugeordneten Induktionsspule mit elektrischem Wechselstrom, zur induktiven Erwärmung des induktiv erwärmbaren Halteelements (32), vorzugsweise durch Bewegung des Halteelements (32) mit dem davon gehaltenen Artikel (A) entlang des zweiten Induktionskanals (34).
iii. Teilschritt E1-3: Siegeln der gefalteten Schlauchenden des Verpackungsmaterials (V) bzw. Verpackungsmaterialzuschnitts (V*) an den Stirnseiten (A3) des Artikels (A), vorzugsweise durch Längssiegeln entlang oder parallel zur vierten Bewegungsrichtung (B4).
iv. Teilschritt E1-4: Entfernen des Halteelements (32) mit dem davon gehaltenen Artikel (A) aus dem zweiten Induktionskanal (34).
b. Teilschritt E2: Siegeln des Verpackungsmaterials (V) durch einen dem Halteelement (32) zugeordneten, induktiv erwärmbaren Bodensiegelstempel (35), vorzugsweise umfassend wenigstens einen der folgenden Teilschritte:
i. Teilschritt E2-1: Einbringen des induktiv erwärmbaren Bodensiegelstempels (35) in den zweiten Induktionskanal (34).
ii. Teilschritt E2-2: Erzeugen eines magnetischen Wechselfeldes innerhalb des zweiten Induktionskanals (34), vorzugsweise durch Beaufschlagung einer dem ersten Induktionskanal (33) zugeordneten Induktionsspule mit elektrischem Wechselstrom, zur induktiven Erwärmung des induktiv erwärmbaren Bodensiegelstempels (35), vorzugsweise durch Bewegung des Bodensiegelstempels (35) entlang des zweiten Induktionskanals (34).
iii. Teilschritt E2-3: Andrücken des induktiv erwärmten Bodensiegelstempels (35) auf die überlappenden Enden des den Artikel (A) umschließenden Verpackungsmaterialzuschnitts (P).
iv. Teilschritt E2-4: Siegeln der überlappenden Enden des den Artikel (A) umschließenden Verpackungsmaterialzuschnitts (P) für jeden vereinzelten Artikel, vorzugsweise durch Quersiegeln senkrecht zur Bewegungsrichtung (B4), bevorzugt auf einer der Rotationsachse (31) des Rotationskopfs (30) zugewandten Seitenfläche (A1) des Artikels (A).
v. Teilschritt E2-5: Entfernen des Bodensiegelstempels (35) von dem Artikel (A).
vi. Teilschritt E2-6: Entfernen des Bodensiegelstempels (35) aus dem zweiten Induktionskanal (34).
c. Teilschritt E3: Abgabe des im versiegelten Verpackungsmaterialzuschnitt eingeschlossenen Artikels (A) an eine nachgelagerte Einrichtung.

5. Vorrichtung (1) zum Verpacken von kleinstückigen Artikeln (A), vorzugsweise nach dem Verfahren gemäß einem der vorangehenden Ansprüche, umfassend wenigstens eine vorzugsweise als Rotationskopf (30) ausgebildete Fördereinrichtung mit wenigstens einem induktiv erwärmbaren Haltelement (32) zum Halten und Fördern eines mit heißsiegelfähigem Verpackungsmaterial (V) umgebenen Artikels (A) entlang einer Bewegungsbahn (B4), und wenigstens eine Induktionseinrichtung (33, 34) zur induktiven Erwärmung des induktiv erwärmbaren Haltelements (32), wobei das induktiv erwärmbare Haltelement (32) ausgebildet ist, um in einem erwärmten Zustand das heißsiegelfähige Verpackungsmaterial (V) zu siegeln.

6. Vorrichtung (1) nach Anspruch 5, **dadurch gekennzeichnet, dass** das Haltelement (32) ausgebildet ist, um den mit heißsiegelfähigem Verpackungsmaterial (V) umgebenen Artikel (A) kraftschlüssig und/oder formschlüssig zu halten.

7. Vorrichtung (1) nach Anspruch 5 oder 6, **dadurch gekennzeichnet, dass** das Haltelement (32) ein Klemmbackenpaar (32) zum Einklemmen des Artikels (A) aufweist, wobei vorzugsweise lediglich die Klemmbacken des Klemmbackenpaars (32) induktiv erwärmbar sind und die Klemmbacken bevorzugt gegenüber angrenzenden Bauelementen thermisch isoliert sind, um einen Wärmeverlust an die Umgebung zu vermeiden.

8. Vorrichtung (1) nach Anspruch 7, **dadurch gekennzeichnet, dass** jede Klemmbacke des Klemmbackenpaars (32) eine Form und/oder Größe und/oder Innenkontur aufweist, die an eine Form und/oder Größe und/oder Außenkontur der einzuklemmenden Seitenfläche (A3) des Artikels (A) angepasst ist.

9. Vorrichtung (1) nach einem der Ansprüche 5 bis 8, **dadurch gekennzeichnet, dass** die Induktionseinrichtung (33, 34) wenigstens einen Induktionskanal (33, 34) aufweist, der sich zumindest abschnittsweise entlang der Bewegungsrichtung (B4) der Fördereinrichtung erstreckt, wobei der Induktionskanal (33, 34) vorzugsweise verstellbar gegenüber der Fördereinrichtung (10) ausgebildet und/oder angeordnet ist, um beispielsweise einen Zugang zur Fördereinrichtung zu Wartungszwecken zu ermöglichen.

10. Vorrichtung (1) nach einem der Ansprüche 5 bis 9, **dadurch gekennzeichnet, dass** die Induktionseinrichtung (33, 34) zwei Induktionskanäle (33, 34) aufweist, die sich im Abstand voneinander jeweils zumindest abschnittsweise entlang der Bewegungsrichtung (B4) der Fördereinrichtung erstrecken, wobei der erste Induktionskanal (33) ausgebildet ist, um das Halteelement (32) vor der Aufnahme eines Artikel (A) induktiv zu erwärmen und wobei der zweite Induktionskanal (34) ausgebildet ist, um das Halteelement (32) während des Haltens eines Artikel (A) induktiv zu erwärmen.

11. Vorrichtung (1) nach Anspruch 10, **dadurch gekennzeichnet, dass** die Übergabe des Artikels (A) von einer vorgelagerten Einrichtung (20) an das Halteelement (32) und/oder die Übergabe des Artikels (A) von dem Halteelement (32) an eine nachgelagerte Einrichtung zwischen dem ersten Induktionskanal (33) und dem zweiten Induktionskanal (34) erfolgt.

12. Vorrichtung (1) nach einem der Ansprüche 5 bis 11, **dadurch gekennzeichnet, dass** die Induktionseinrichtung (33, 34) ausgebildet ist, um die mit heißsiegelfähigem Verpackungsmaterial (V) umgebenen Artikel (A) in einem einzelnen oder in mehreren parallelen Produktströmen zu verpacken, vorzugsweise die Artikel (A) in einem einzelnen oder in mehreren parallelen Produktströmen durch die Induktionseinrichtung (33, 34) zu führen, bevorzugt die Artikel (A) in einem einzelnen oder in mehreren parallelen Produktströmen durch denselben Induktionskanal (34) zu führen.

13. Vorrichtung (1) nach einem der Ansprüche 9 bis 11, **dadurch gekennzeichnet, dass** jeder Induktionskanal (33, 34) rinnenförmig ausgebildet ist und ein im Wesentlichen U-förmiges Querschnittsprofil aufweist, wobei jedem Induktionskanal (33, 34) wenigstens eine Induktionsspule zugeordnet ist, die zum Erzeugen eines magnetischen Wechselfeldes innerhalb des Induktionskanals (33, 34) und zur induktiven Erwärmung des induktiv erwärmbaren Halteelements (32) mit elektrischem Wechselstrom beaufschlagbar ist.

14. Vorrichtung (1) nach einem der Ansprüche 5 bis 13, **dadurch gekennzeichnet, dass** jedem Halteelement (32) ein induktiv erwärmbarer Bodensiegelstempel (35) zur Siegelung einer Bodenfalte des Verpackungsmaterials (V) zugeordnet ist.

## Claims

1. A method for packaging small-sized products (A), comprising the following steps:
a. step A: conveying the products (A) in a product flow along a moving path (B1, B2, B3, B4),
b. step B: allocating heat-sealable packaging material (V) to each product (A), preferably in separated form as packaging material blank (V*),
c. step C: forming the packaging material (V) around the product (A), preferably by arranging the packaging material (V) in tubular form and then folding the tube ends of the packaging material (V) onto two side faces (A3) of the product (A) facing away from each other,
d. step D: holding the product (A) and the formed packaging material (V) with a holding element (32) for conveying the product (A) along the path of movement (B1, B2, B3, B4), preferably by clamping the end faces (A3) of the product (A) and the tube ends folded thereon between a pair of clamping jaws of the holding element (32),
e. step E: sealing of the formed packaging material (V) by heating the holding element (32), preferably by the heated pair of clamping jaws (32) at the end faces (A3) of the product (A).

2. The method according to claim 1, **characterized in that** step C comprises at least one of the following sub-steps:
a. sub-step C1: arranging the packaging material (V) in tubular form around each product, preferably completely enclosing the product (A) with a packaging material blank (V*) such that the ends of the packaging material blank (V*) overlap at least partially, preferably on one of the two largest side faces (A1) of each cuboidal product (A), wherein the packaging material blank (V*) in particular preferably rests over its entire surface on four adjacent side faces (A1, A2) of each cuboidal product (A), for example the two largest and the two middle side faces (A1, A2) of each cuboidal product (A), and/or two side faces (A3) of each cuboidal product (A) facing away from each other, for example the two smallest side faces (A3) or end faces of each cuboidal product (A), are exposed towards the ends of the tubular packaging material blank (V*),
b. sub-step C2: folding the tube ends of the packaging material (V) onto two side faces (A3) facing away from each other or end faces of the product (A), preferably by means of movable and/or stationary folding elements, preferably with removal of the excess lengths of the packaging material blank (V*) and with closure of the open side faces (A3) or end faces of each cuboidal product (A), particularly preferably during conveying of the product (A),
c. sub-step C3: pressing the folded tube ends of the packaging material (V) against the side faces (A3) facing away from each other or end faces of the product (A).

3. The method according to one of the preceding claims, **characterized in that** step D comprises at least one of the following sub-steps:
a. sub-step D1: preheating the holding element (32) of a sealing device (30) prior to the transfer of the packaged product (A) at a transfer station from the packaging device (20) to the holding element (32), the sealing device (30) preferably having a conveying device configured as a rotary head (30), wherein the rotary head (30) is rotatable about a stationary rotation axis (31) and comprises a plurality of holding elements (32) for holding and conveying the products (A), wherein the holding elements (32) are arranged circumferentially on the rotary head (30) at regular intervals, wherein each holding element (32) preferably comprises an inductively heatable pair of clamping jaws (32), wherein sub-step D1 preferably comprises at least one of the following sub-steps:
i. sub-step D1-1: introducing the holding element (32) without product into a first induction channel (33) which extends at least partially along the direction of movement (B4) of the holding element (32),
ii. sub-step D1-2: generating an alternating magnetic field within the first induction channel (33), preferably by applying alternating current to an induction coil allocated to the first induction channel (33), for inductive heating of the inductively heatable holding element (32), preferably by moving the holding element (32) without product along the first induction channel (33),
iii. sub-step D1-3: removing the inductively heatable holding element (32) without product from the first induction channel (33),
b. sub-step D2: preheating a bottom sealing stamp (35) allocated to the holding element (32) of the sealing device (30) prior to the transfer of the packaged product (A) at a transfer station from the packaging device (20) to the holding element (32), wherein sub-step D2 preferably comprises at least one of the following sub-steps:
i. sub-step D2-1: introducing the bottom sealing stamp (35) into a first induction channel (33) which extends at least partially along the direction of movement (B4) of the bottom sealing stamp (35),
ii. sub-step D2-2: generating an alternating magnetic field within the first induction channel (33), preferably by applying alternating current to an induction coil allocated to the first induction channel (33), for inductive heating of the inductively heatable bottom sealing stamp (35), preferably by moving the bottom sealing stamp (35) along the first induction channel (33),
iii. sub-step D2-3: removing the inductively heatable bottom sealing stamp (35) from the first induction channel (33),
c. sub-step D3: transferring the packaged product (A) at the transfer station from the packaging device (20) to the holding element (32) of the sealing device (30),
d. sub-step D4: picking up the product (A) with the holding element (32) of the holding device (30) such that the product (A) is held non-positively and/or positively by the holding element (32), preferably by clamping the end faces (A3) of the product (A) and the tube ends of the packaging material (V) or packaging material blank (V*) folded thereon between the pair of clamping jaws (32) of the holding element,
e. sub-step D5: conveying the products (A) by means of the conveying device (30) in a single or in multiple parallel product streams, preferably along a fourth direction of movement (B4) other than the third direction of movement (B3) of the packing device (20), preferably along a circular path and/or in a vertical plane, in particular preferably in a continuous process, wherein most preferably the two largest side faces (A1) and/or the two smallest side faces (A3) of each cuboidal product (A) are aligned parallel to the fourth direction of movement (B4) and/or wherein the two middle side faces (A2) of each cuboidal product (A) are aligned perpendicular to the fourth direction of movement (B4).

4. The method according to one of the preceding claims, **characterized in that** step E comprises at least one of the following sub-steps:
a. sub-step E1: sealing the packaging material (V) by the inductively heated holding element (32), preferably comprising at least one of the following sub-steps:
i. sub-step E1-1: introducing the inductively heatable holding element (32) with a product (A) held thereby in a single or in multiple parallel product streams into a second induction channel (34), which extends at least partially along the direction of movement (B4) of the holding element (32), preferably in such a way that the held product (A) is located entirely within the second induction channel (34),
ii. sub-step E1-2: generating an alternating magnetic field within the second induction channel (34), preferably by applying alternating current to an induction coil allocated to the second induction channel (34) for inductive heating of the inductively heatable holding element (32), preferably by moving the holding element (32) with the product (A) held thereby along the second induction channel (34),
iii. sub-step E1-3: sealing the folded tube ends of the packaging material (V) or packaging material blank (V*) at the end faces (A3) of the product (A), preferably by longitudinal sealing along or parallel to the fourth direction of movement (B4),
iv. sub-step E1-4: removing the holding element (32) with the product (A) held thereby from the second induction channel (34),
b. sub-step E2: sealing the packaging material (V) by an inductively heatable bottom sealing stamp (35) allocated to the holding element (32), preferably comprising at least one of the following sub-steps:
i. sub-step E2-1: introducing the inductively heatable bottom sealing stamp (35) into the second induction channel (34),
ii. sub-step E2-2: generating an alternating magnetic field within the second induction channel (33), preferably by applying alternating current to an induction coil allocated to the first induction channel (33) for inductive heating of the inductively heatable bottom sealing stamp (35), preferably by moving the bottom sealing stamp (35) along the second induction channel (33),
iii. sub-step E2-3: pressing the inductively heated bottom sealing stamp (35) onto the overlapping ends of the packaging material blank (P) enclosing the product (A),
iv. sub-step E2-4: sealing the overlapping ends of the packaging material blank (P) enclosing the product (A) for each separated product, preferably by transverse sealing perpendicular to the direction of movement (B4), preferably on a lateral surface (A1) of the product (A) facing the axis of rotation (31) of the rotary head (30),
v. sub-step E2-5: removing the bottom seal stamp (35) from the product (A),
vi. sub-step E2-6: removing the bottom sealing stamp (35) from the second induction channel (34),
c. sub-step E3: delivering the product (A) enclosed in the sealed packaging material blank to a downstream device.

5. Apparatus (1) for packaging small-sized products (A), preferably by the method according to one of the preceding claims, comprising at least one conveying device, preferably configured as a rotary head (30), with at least one inductively heatable holding element (32) for holding and conveying a product (A) surrounded by heat-sealable packaging material (V) along a movement path (B4), and at least one induction device (33, 34) for inductively heating the inductively heatable holding element (32), wherein the inductively heatable holding element (32) is configured to seal the heat-sealable packaging material (V) in a heated state.

6. The apparatus (1) according to claim 5, **characterized in that** the holding element (32) is configured to hold the product (A) surrounded by heat-sealable packaging material (V) in a non-positive and/or positive manner.

7. The apparatus (1) according to claim 5 or 6, **characterized in that** the holding element (32) comprises a pair of clamping jaws (32) for clamping the product (A), wherein preferably only the clamping jaws of the pair of clamping jaws (32) are inductively heatable and preferably the clamping jaws are thermally insulated from adjacent components in order to avoid heat loss to the environment.

8. The apparatus (1) according to claim 7, **characterized in that** each jaw of the pair of jaws (32) has a shape and/or size and/or inner contour adapted to a shape and/or size and/or outer contour of the side face (A3) of the product (A) to be clamped.

9. The apparatus (1) according to one of claims 5 to 8, **characterized in that** the induction device (33, 34) includes at least one induction channel (33, 34) which extends at least in sections along the direction of movement (B4) of the conveyor device, wherein the induction channel (33, 34) is preferably configured and/or arranged adjustably relative to the conveyor device (10), for example to allow access to the conveyor device for maintenance purposes.

10. The apparatus (1) according to one of claims 5 to 9, **characterized in that** the induction device (33, 34) includes two induction channels (33, 34) which each extend at least partially at a distance from one another along the direction of movement (B4) of the conveying device, wherein said first induction channel (33) is adapted to inductively heat said holding member (32) before holding an product (A), and wherein said second induction channel (34) is configured to inductively heat said holding member (32) while holding a product (A).

11. The apparatus (1) according to claim 10, **characterized in that** the transfer of the product (A) from an upstream device (20) to the holding element (32) and/or the transfer of the product (A) from the holding element (32) to a downstream device takes place between the first induction channel (33) and the second induction channel (34).

12. The apparatus (1) according to one of claims 5 to 11, **characterized in that** the induction device (33, 34) is configured to package the products (A) enclosed in heat-sealable packaging material (V) in a single or in multiple parallel product streams, preferably to guide the products (A) in a single or in multiple parallel product streams through the induction device (33, 34), preferably to guide the products (A) in a single or in multiple parallel product streams through the same induction channel (34).

13. The apparatus (1) according to one of claims 9 to 11, **characterized in that** each induction channel (33, 34) is channel-shaped and has a substantially U-shaped cross-sectional profile, wherein to each induction channel (33, 34) there is allocated at least one induction coil to which alternating current can be applied to generate an alternating magnetic field within the induction channel (33, 34) and inductively heat the inductively heatable holding element (32).

14. The apparatus (1) according to one of claims 5 to 13, **characterized in that** an inductively heatable bottom sealing stamp (35) is allocated to each holding element (32) for sealing a bottom gusset of the packaging material (V).

## Revendications

1. Procédé d'emballage d'articles de petite article (A), comprenant les étapes suivantes
a. Etape A: Transport des articles (A) dans un flux de produits le long d'une trajectoire de mouvement (B1, B2, B3, B4).
b. Etape B: Attribution d'un matériau d'emballage pouvant être scellé à chaud (V) à chaque article (A), de préférence sous forme individuelle sous la forme d'un blanc de matériau d'emballage (V*).
c. Etape C: Conformer le matériau d'emballage (V) autour de l'article (A), de préférence en disposant le matériau d'emballage (V) sous forme tubulaire, puis en pliant les extrémités tubulaires du matériau d'emballage (V) sur deux surfaces latérales opposées (A3) de l'article (A).
d. Etape D: Maintien de l'article (A) et du matériau d'emballage façonné (V) avec un élément de maintien (32) pour transporter l'article (A) le long de la trajectoire (B1, B2, B3, B4), de préférence en serrant les faces frontales (A3) de l'article (A) et les extrémités de tube pliées sur celui-ci entre une paire de mâchoires de serrage de l'élément de maintien (32).
e. Etape E: Scellage du matériau d'emballage formé (V) par chauffage de l'élément de maintien (32), de préférence par la paire de mâchoires de serrage chauffées (32) sur les faces frontales (A3) de l'article (A).

2. Procédé selon la revendication 1, **caractérisé en ce que** l'étape C comprend au moins une des sous-étapes suivantes:
a. Sous-étape C1: Disposition du matériau d'emballage (V) sous forme tubulaire autour de chaque article, de préférence en entourant complètement l'article (A) d'un flan de matériau d'emballage (V*), de sorte que les extrémités du flan de matériau d'emballage (V*) se chevauchent au moins par sections, de préférence sur l'une des deux plus grandes faces latérales (A1) de chaque article parallélépipédique (A), dans lequel le flan de matériau d'emballage (V*) repose de manière particulièrement préférentielle sur toute sa surface contre quatre surfaces latérales adjacentes (A1, A2) de chaque article parallélépipédique (A), par exemple les deux surfaces latérales les plus grandes et les deux surfaces latérales médianes (A1, A2) de chaque article parallélépipédique (A) et/ou deux faces latérales (A3) de chaque parallélépipède (A) qui sont opposées l'une à l'autre, par exemple les deux plus petites faces latérales (A3) ou les faces d'extrémité de chaque parallélépipède (A), sont exposées vers les extrémités du flan (V*) du matériau d'emballage disposé sous forme de tube.
b. Sous-étape C2: Pliage des extrémités de tube du matériau d'emballage (V) sur deux faces latérales (A3) ou faces frontales de l'article (A) opposées l'une à l'autre, de préférence au moyen d'éléments de pliage mobiles et/ou fixes, de préférence en enlevant les saillies du flan de matériau d'emballage (V*) et en fermant les faces latérales (A3) ou faces frontales ouvertes de chaque article parallélépipédique (A), de préférence pendant le transport de l'article (A).
c. Sous-étape C3: Compression des extrémités du tube plié du matériau d'emballage (V) contre les faces latérales (A3) ou les faces d'extrémité de l'article (A) qui sont opposées l'une à l'autre.

3. Procédé selon l'une des revendications précédentes, **caractérisé en ce que** l'étape D comprend au moins l'une des sous-étapes suivantes:
a. Sous-étape D1: Préchauffage de l'élément de maintien (32) d'un dispositif de fermeture (30) avant le transfert de l'article emballé (A) à un poste de transfert du dispositif d'emballage (20) à l'élément de maintien (32), le dispositif de fermeture (30) présentant de préférence un dispositif de transport conçu comme tête rotative (30), dans lequel la tête rotative (30) peut tourner autour d'un axe de rotation fixe (31) et présente plusieurs éléments de maintien (32) pour maintenir et transporter les objets (A), dans lequel les éléments de maintien (32) sont disposés à intervalles réguliers sur la tête rotative (30), dans lequel chaque élément de maintien (32) présente de préférence une paire de mâchoires de serrage (32) pouvant être chauffées par induction, dans lequel la sous-étape D1 présente de préférence au moins une des sous-étapes suivantes:
i. Sous-étape D1-1: Insertion de l'élément de maintien (32) sans article dans un premier canal d'induction (33) qui s'étend au moins par sections le long de la direction de mouvement (B4) de l'élément de maintien (32).
ii. Sous-étape D1-2: Génération d'un champ magnétique alternatif dans le premier canal d'induction (33), de préférence en appliquant un courant électrique alternatif à une bobine d'induction associée au premier canal d'induction (33), pour chauffer par induction l'élément de maintien (32) pouvant être chauffé par induction, de préférence en déplaçant l'élément de maintien (32) sans article le long du premier canal d'induction (33).
iii. Sous-étape D1-3: Retrait de l'élément de maintien (32) chauffé par induction sans article du premier canal d'induction (33).
b. Sous-étape D2: Préchauffage d'un tampon de scellage de fond (35) associé à l'élément de maintien (32) du dispositif de scellage (30) avant le transfert de l'article emballé (A) à un poste de transfert du dispositif d'emballage (20) à l'élément de maintien (32), dans laquelle la sous-étape D2 comprend de préférence au moins une des sous-étapes suivantes:
i. Sous-étape D2-1: Insertion du poinçon de scellement du fond (35) dans un premier canal d'induction (33) qui s'étend au moins par sections le long de la direction de déplacement (B4) du poinçon de scellement du fond (35).
ii. Sous-étape D2-2: Génération d'un champ magnétique alternatif dans le premier canal d'induction (33), de préférence en appliquant un courant électrique alternatif à une bobine d'induction associée au premier canal d'induction (33), pour chauffer par induction le poinçon de scellement de fond (35) pouvant être chauffé par induction, de préférence en déplaçant le poinçon de scellement de fond (35) le long du premier canal d'induction (33).
iii. Sous-étape D2-3: Retrait du poinçon de scellement du fond (35), chauffé par induction, du premier canal d'induction (33).
c. Sous-étape D3: Transfert de l'article emballé (A) au poste de transfert du dispositif d'emballage (20) à l'élément de maintien (32) du dispositif de fermeture (30).
d. Sous-étape D4: Réception de l'article (A) avec l'élément de maintien (32) du dispositif de fermeture (30), de sorte que l'article (A) soit maintenu par l'élément de maintien (32) par une force et/ou une forme, de préférence en serrant les faces frontales (A3) de l'article (A) et les extrémités du tube du matériau d'emballage (V) ou du flan de matériau d'emballage (V*) plié sur celui-ci entre la paire de mâchoires de serrage (32) de l'élément de maintien.
e. Sous-étape D5: Transport des articles (A) au moyen du dispositif de transport (30) en un seul ou en plusieurs flux de produits parallèles, de préférence le long d'une quatrième direction de déplacement (B4) modifiée par rapport à la troisième direction de déplacement (B3) du dispositif d'emballage (20), de préférence le long d'une trajectoire circulaire et/ou dans un plan vertical, en particulier de préférence dans un processus continu, les deux plus grandes surfaces latérales (A1) et/ou les deux plus petites surfaces latérales (A3) de chaque objet parallélépipédique (A) étant de préférence orientées parallèlement à la quatrième direction de déplacement (B4) et/ou les deux surfaces latérales centrales (A2) de chaque objet parallélépipédique (A) étant - orientées perpendiculairement à la quatrième direction de déplacement (B4).

4. Procédé selon l'une des revendications précédentes, **caractérisé en ce que** l'étape E comprend au moins l'une des sous-étapes suivantes:
a. Sous-étape E1: Scellage du matériau d'emballage (V) par l'élément de maintien (32) chauffé par induction, comprenant de préférence au moins une des sous-étapes suivantes:
I. Sous-étape E1-1: Insertion de l'élément de maintien (32) pouvant être chauffé par induction avec un article (A) maintenu par celui-ci en un seul ou plusieurs flux de produits parallèles dans un deuxième canal d'induction (34) s'étendant au moins par sections le long de la direction de déplacement (B4) de l'élément de maintien (32), de préférence de telle sorte que l'article maintenu (A) se trouve entièrement dans le deuxième canal d'induction (34).
II. Sous-étape E1-2: Génération d'un champ magnétique alternatif à l'intérieur du premier canal d'induction (33), de préférence en appliquant un courant électrique alternatif à une bobine d'induction associée au premier canal d'induction (33), pour le chauffage inductif de la matrice de scellage inférieure (35) pouvant être chauffée par induction, de préférence en déplaçant la matrice de scellage inférieure (35) le long du premier canal d'induction (33).
iii. Sous-étape E1-3: Scellage des extrémités du tube plié du matériau d'emballage (V) ou du flan de matériau d'emballage (V*) sur les faces frontales (A3) de l'article (A), de préférence par scellage longitudinal le long ou parallèlement à la quatrième direction de déplacement (B4).
iv. Sous-étape E1-4: Retrait de l'élément de maintien (32) avec l'article (A) qu'il maintient du deuxième canal d'induction (34).
b. Sous-étape E2: Scellage du matériau d'emballage (V) par un tampon de scellage de fond (35) chauffé par induction, associé à l'élément de maintien (32), comprenant de préférence au moins une des sous-étapes suivantes:
i. Sous-étape E2-1: Insertion du poinçon de scellement du fond chauffé par induction (35) dans le deuxième canal d'induction (34).
II Sous-étape E2-2: Génération d'un champ magnétique alternatif dans le deuxième canal d'induction (34), de préférence en appliquant un courant électrique alternatif à une bobine d'induction associée au premier canal d'induction (33), pour chauffer par induction le piston d'étanchéité inférieur (35) pouvant être chauffé par induction, de préférence en déplaçant le piston d'étanchéité inférieur (35) le long du deuxième canal d'induction (34).
iii. Sous-étape E2-3: Compression du poinçon de scellement du fond chauffé par induction (35) sur les extrémités chevauchantes du flan de matériau d'emballage (P) enfermant l'article (A).
iv. Sous-étape E2-4: Scellage des extrémités se chevauchant du flan de matériau d'emballage (P) entourant l'article (A) pour chaque article séparé, de préférence par scellage transversal perpendiculaire à la direction du mouvement (B4), de préférence sur une surface latérale (A1) de l'article (A) tournée vers l'axe de rotation (31) de la tête rotative (30).
v. Sous-étape E2-5: Séparation du cachet du sceau inférieur (35) de l'article (A).
vi. Sous-étape E2-6: Retrait du poinçon du joint inférieur (35) du deuxième canal d'induction (34).
c. Sous-étape E3: Livraison de l'article (A) enfermé dans l'ébauche de matériau d'emballage scellé à une installation en aval.

5. Dispositif (1) pour l'emballage d'articles de petite taille (A), de préférence selon le procédé selon l'une des revendications précédentes, comprenant au moins un dispositif de transport, de préférence conçu comme une tête rotative (30), avec au moins un élément de maintien (32) pouvant être chauffé par induction pour maintenir et transporter un article (A) entouré de matériau d'emballage (V) pouvant être scellé à chaud le long d'une trajectoire (B4), et au moins un dispositif d'induction (33, 34) pour chauffer par induction l'élément de maintien (32) pouvant être chauffé par induction, dans lequel l'élément de maintien (32) pouvant être chauffé par induction est conçu pour sceller le matériau d'emballage (V) pouvant être scellé à chaud.

6. Dispositif (1) selon la revendication 5, **caractérisé en ce que** l'élément de maintien (32) est conçu pour maintenir l'article (A) entouré d'un matériau d'emballage pouvant être scellé à chaud (V) de manière non positive et/ou positive.

7. Dispositif (1) selon les revendications 5 ou 6, **caractérisé en ce que** l'élément de maintien (32) comprend une paire de mâchoires de serrage (32) pour serrer l'article (A), de préférence seules les mâchoires de serrage de la paire de mâchoires de serrage (32) pouvant être chauffées par induction et les mâchoires de serrage étant de préférence isolées thermiquement des composants adjacents afin d'éviter les pertes de chaleur dans l'environnement.

8. Dispositif (1) selon la revendication 7, **caractérisé en ce que** chaque mâchoire de la paire de mâchoires (32) a une forme et/ou une taille et/ou un contour intérieur adapté à une forme et/ou une taille et/ou un contour extérieur de la surface latérale (A3) de l'article (A) à serrer.

9. Dispositif (1) selon l'une des revendications 5 à 8, **caractérisé en ce que** le dispositif d'induction (33, 34) présente au moins un canal d'induction (33, 34) qui s'étend au moins par sections le long de la direction de déplacement (B4) du
dispositif de transport, dans lequel le canal d'induction (33, 34) est de préférence formé et/ou disposé de manière réglable par rapport au dispositif de transport (10), par exemple pour permettre l'accès au dispositif de transport à des fins de maintenance.

10. Dispositif (1) selon l'une des revendications 5 à 9, **caractérisé en ce que** le dispositif d'induction (33, 34) présente deux canaux d'induction (33, 34) qui - s'étendent à distance l'un de l'autre à chaque fois au moins par sections le long de la direction de déplacement (B4) du dispositif de transport, dans lequel ledit premier canal d'induction (33) est conçu pour chauffer par induction ledit - élément de maintien (32) avant de maintenir un article (A), et dans lequel ledit second canal d'induction (34) est conçu pour chauffer par induction ledit - élément de maintien (32) tout en maintenant un article (A).

11. Dispositif (1) selon la revendication 10, **caractérisé en ce que** le transfert de l'article (A) d'un dispositif en amont (20) à l'élément de maintien (32) et/ou le transfert de l'article (A) de l'élément de maintien (32) à un dispositif en aval a lieu entre le premier canal d'induction (33) et le deuxième canal d'induction (34).

12. Dispositif (1) selon l'une des revendications 5 à 11, **caractérisé en ce que** le dispositif d'induction (33, 34) est conçu pour emballer les articles (A) entourés de matériau d'emballage pouvant être scellé à chaud (V) dans un seul ou plusieurs flux de produit parallèles, de préférence pour guider les articles (A) dans un seul ou plusieurs flux de produit parallèles à travers le dispositif d'induction (33, 34), de préférence pour guider les articles (A) dans un seul ou plusieurs flux de produit parallèles à travers le même canal d'induction (34).

13. Dispositif (1) selon l'une des revendications 9 à 11, **caractérisé en ce que** chaque canal d'induction (33, 34) est en forme de canal et présente un profil de section transversale sensiblement en forme de U, à chaque canal d'induction (33, 34) étant associée au moins une bobine d'induction qui peut être alimentée en courant électrique alternatif pour générer un champ magnétique alternatif à l'intérieur du canal d'induction (33, 34) et pour chauffer par induction l'élément de maintien (32) pouvant être chauffé par induction.

14. Dispositif (1) selon l'une des revendications 5 à 13, **caractérisé en ce qu'**à chaque élément de maintien (32) est associé un tampon de scellement de fond (35) pouvant être chauffé par induction pour sceller un pli de fond du matériau d'emballage (V).
